# EUROPÄISCHE PATENTSCHRIFT

(11) **EP 2 914 453 B1**
(45) Veröffentlichungstag und Bekanntmachung des Hinweises auf die Patenterteilung: **01.01.2020**
(21) Anmeldenummer: 13780120.5
(22) Anmeldetag: 21.10.2013
(51) Int. Cl.: B60K 35/00, B60L 3/12

(54) **VERFAHREN UND VORRICHTUNG ZUR WIEDERGABE VON DEN ENERGIEVORRAT EINES ENERGIESPEICHERS REPRÄSENTIERENDEN MESSWERTEN**
METHOD AND DEVICE FOR REPRODUCING MEASURED VALUES REPRESENTING THE ENERGY RESERVE OF AN ENERGY STORE
PROCÉDÉ ET DISPOSITIF POUR REPRODUIRE DES VALEURS DE MESURE REPRÉSENTANT LA RÉSERVE D'ÉNERGIE D'UN ACCUMULATEUR D'ÉNERGIE

(30) Priorität: 05.11.2012 DE 102012021735
(43) Veröffentlichungstag der Anmeldung: 09.09.2015
(73) Patentinhaber: Volkswagen Aktiengesellschaft, 38440 Wolfsburg (DE)
(72) Erfinder: HEINRICH, Axel, 38527 Meine (DE); BURGHOFF, Christian, 38106 Braunschweig (DE); WAGNER, Wagner, 10965 Berlin (DE); PEUKERT, Matthias, 38106 Braunschweig (DE)
(86) Internationale Anmeldenummer: PCT/EP2013/071931
(87) Internationale Veröffentlichungsnummer: WO 2014/067801

(56) Entgegenhaltungen:
- EP-A1- 2 489 990

## Beschreibung

Die Erfindung betrifft ein Verfahren zur Wiedergabe von Messwerten, bei dem ein einen Energievorrat eines Energiespeichers repräsentierender erster Messwert empfangen wird, ein mit dem ersten Messwert in Beziehung stehender zweiter Messwert ermittelt wird, der erste Messwert mit Hilfe einer Ablesemarke an einer Skala wiedergegeben wird und der zweite Messwert wiedergegeben wird.

Die Erfindung betrifft ferner eine Vorrichtung zur Wiedergabe von Messwerten mit einer Anzeigefläche, einer Datenschnittstelle, einer Recheneinheit, die eingerichtet ist, den ersten Messwert über die Datenschnittstelle zu empfangen und den zweiten Messwert zu ermitteln, und einer Steuereinheit, die eingerichtet ist, den ersten Messwert mit Hilfe der Ablesemarke an der Skala und den zweiten Messwert auf der Anzeigefläche wiederzugeben.

Ein derartiges Verfahren lässt sich der DE 199 59 597 C1 entnehmen. Bei der hier offenbarten Ausführungsform wird ein elektronisch ansteuerbares Display in einem Kraftfahrzeug derart angesteuert, dass mindestens zwei miteinander in einem Wirkzusammenhang stehende Informationen durch grafische Darstellung im Vergleich angezeigt werden. Als in einem Wirkzusammenhang stehende Informationen sind beispielhaft folgende Wertepaare genannt: Reichweite/Distanz, Tankinhalt/Reichweite. Dabei werden die Informationen am selben Ort im Wechsel nacheinander angezeigt.

Das Dokument EP 2 489 990 A1 offenbart den Oberbegriff des Anspruchs 1.

Der Erfindung liegt die Aufgabe zugrunde, den Informationsgehalt bei dem eingangs beschriebenen Verfahren und der eingangs beschriebenen Vorrichtung für einen Benutzer zu verbessern.

Diese Aufgabe wird erfindungsgemäß mit einem Verfahren der eingangs erwähnten Art dadurch gelöst, dass wenn der erste Messwert einen Schwellenwert erreicht oder unterschreitet, der zweite Messwert die Skala in einem Bereich oberhalb der Ablesemarke zumindest teilweise überdeckend wiedergegeben wird.

Der Kern der Erfindung liegt darin, dass dem Benutzer sowohl der erste Messwert als auch der zweite Messwert gleichzeitig angezeigt werden. Der zweite Messwert wird oberhalb der Ablesemarke wiedergegeben. "Oberhalb" im Sinne dieser Erfindung ist auf den mittels der Ablesemarke an der Skala wiedergebbaren Wertebereich bezogen und meint den Bereich der Skala, der zwischen dem durch die Ablesemarke repräsentierten Wert und dem einen vollständig gefüllten Energiespeicher repräsentierenden Wert liegt. Die Ablesemarke selbst ist nicht Teil des Bereiches "oberhalb". Diese besondere Art und Weise der Wiedergabe des ersten Messwertes und des zweiten Messwertes stellt für den Benutzer einen Gewinn an Information dar, ohne dass eine für ihn wichtige Information entfällt.

Der Begriff "Messwert" ist weit zu verstehen. Er umfasst zunächst einen direkt gemessenen Wert einer Messgröße. Darüber hinaus umfasst er auch einen indirekt gemessenen Wert einer Messgröße, bei dem der Wert aus einer direkten Messung oder mehreren direkten Messungen abgeleitet wird.

Unter einer Bedingung im Sinne dieser Erfindung ist insbesondere zu verstehen, dass der erste Messwert einen Schwellenwert erreicht oder unterschreitet. Der Schwellenwert kann fest vorgegeben oder veränderlich sein. Ist der Schwellenwert veränderlich, so kann er beispielsweise in Abhängigkeit von der zeitlichen Änderung und/oder zeitlichen Änderungsrate des Energievorrates verändert werden.

Der zweite Messwert braucht nicht schon dann oder immer dann ermittelt zu werden, wenn der erste Messwert erhalten worden ist. Wird der Eintritt der Bedingung nicht anhand des zweiten Messwertes geprüft, genügt es, den zweiten Messwert mit oder unmittelbar nach Eintritt der Bedingung zu ermitteln.

Die "überdeckende" Wiedergabe des zweiten Messwertes braucht nicht intransparent zu erfolgen, also in dem Sinne, dass die Skala in diesem überdeckten Bereich nicht mehr sichtbar ist. Von der Erfindung wird auch ein transparentes Überdecken der Skala erfasst, das heißt, die Skala darf hinter dem zweiten Messwert durchscheinen. Die transparente Ausführung kommt insbesondere dann in Betracht, wenn der erste Messwert und der zweite Messwert auf räumlich getrennten Anzeigeflächen wiedergegeben und mit Hilfe eines teildurchlässigen Spiegels in Blickrichtung des Benutzers übereinandergelegt werden.

In einer Ausführungsform ist der Energiespeicher als Akkumulator ausgebildet. Zweckmäßigerweise repräsentiert der erste Messwert in dieser Ausführungsform den Ladezustand des Akkumulators. Der Akkumulator kann für sehr unterschiedliche Anwendungen und Einsatzzwecke ausgebildet sein: Antriebsbatterie eines Elektrofahrzeugs; Akkumulator für einen tragbaren Computer (Laptop); Akkumulator für ein mobiles Kommunikationsgerät, beispielsweise eines sogenannten Smartphones.

In einer weiteren Ausführungsform ist der Energiespeicher als Kraftstoffbehälter eines Fahrzeugs (Land-, Wasser- oder Luftfahrzeug) ausgebildet. Zweckmäßigerweise repräsentiert der erste Messwert in dieser Ausführungsform den Füllstand des Kraftstoffbehälters. Als Kraftstoffe kommen beispielsweise in Betracht: Ottokraftstoffe, Dieselkraftstoffe, Autogas (LPG, Liquified Petroleum Gas), verdichtetes Erdgas (CNG, Compressed Natural Gas), Flüssigerdgas (LNG, Liquefied Natural Gas), Wasserstoff für Brennstoffzellen.

Vorteilhafterweise werden die Skala und die Ablesemarke als Grafiken erzeugt. Unter einer "Grafik" im Sinne dieser Erfindung sind sowohl eine Grafikdatei mit digitalen Daten zur Wiedergabe eines Bildes auf einem Bildschirm sowie das auf diese Weise erzeugte Bild zu verstehen. Solche Grafiken werden vorteilhafterweise auf einem freiprogrammierbaren Bildschirm wiedergeben. Auf diese Weise lassen sich die Grafiken einfach in ihrer Gestaltung an unterschiedliche Benutzerkreise anpassen. Darüber hinaus lassen sich die Grafiken einfach an unterschiedliche Rahmenbedingungen anpassen, beispielsweise an verschieden große Anzeigeflächen oder an weitere darzustellende Informationen. Die Ablesemarke kann unterschiedlich ausgebildet sein, etwa als Zeiger oder Balken. Zweckmäßigerweise wird auch der zweite Messwert als Grafik erzeugt.

In einer besonderen Ausführungsform repräsentiert der zweite Messwert eine Restbetriebsdauer. Die Restbetriebsdauer repräsentiert je nach Anwendungsfall unterschiedliche Größen: Restbetriebszeit eines Laptops oder Smartphones; Restreichweite eines Land-, Wasser- oder Luftfahrzeugs. Als Landfahrzeug kommt insbesondere ein Kraftfahrzeug in Betracht.

Die genannte Aufgabe wird erfindungsgemäß ferner mit einer Vorrichtung der eingangs erwähnten Art dadurch gelöst, dass die Steuereinheit eingerichtet ist, den zweiten Messwert bei Eintritt der Bedingung die Skala in dem Bereich oberhalb der Ablesemarke zumindest teilweise überdeckend wiederzugeben.

Die Datenschnittstelle der erfindungsgemäßen Vorrichtung dient der Übertragung von Daten, insbesondere digitaler Daten, und kann unterschiedlich ausgebildet sein: unidirektional oder bidirektional; drahtgebunden oder drahtungebunden. Über die Datenschnittstelle empfängt die Recheneinheit insbesondere den ersten Messwert.

Denkbar ist auch, dass die Recheneinheit weitere Daten über die Datenschnittstelle empfängt. Zweckmäßig sind in diesem Zusammenhang Daten, die für die Ermittlung des zweiten Messwertes nützlich sind. Ist die Vorrichtung beispielsweise als sogenanntes Kombiinstrument für ein Kraftfahrzeug ausgebildet, kommen folgende Daten in Betracht: Navigationsdaten; Wetterdaten; Verkehrsinformationen; Sitzbelegungsdaten; Fahrzeugdaten, wie zum Beispiel Gewicht, Anbauten, Anhänger, Reifendaten. Diese Daten haben Einfluss auf die Restreichweite. Aus Navigationsdaten lassen sich Rückschlüsse auf einen voraussichtlichen Energiebedarf ziehen, der auf Eigenschaften der zu befahrenen Straßenabschnitte zurückzuführen ist, wie Straßenbelag, topografische Eigenschaften, Geschwindigkeitsbegrenzungen, Anzahl von Ampeln. Wetterdaten geben verbrauchsrelevante Informationen, wie Sonne, Regen, Schnee, Nebel, Glatteis. Aus Verkehrsinformationen lassen sich verbrauchsrelevante Informationen gewinnen, wie Verkehrsbehinderungen, Stau, stockender Verkehr, Baustellen, Verkehrsflussdaten. Die Sitzbelegung beeinflusst das Gewicht des Kraftfahrzeugs und damit auch den Energiebedarf, zum Beispiel den Kraftstoffverbrauch. Sitzbelegungsdaten werden beispielsweise von Sitzbelegungssensoren bereitgestellt.

Die Begriffe "Recheneinheit" und "Steuereinheit" sind funktional zu verstehen. Die Recheneinheit ist insbesondere funktional für die Berechnung des mit dem ersten Messwert in Beziehung stehenden zweiten Messwertes zuständig. Die Steuereinheit ist insbesondere funktional für das Ansteuern der Anzeigefläche zuständig. Hierzu erzeugt die Steuereinheit aus dem ersten und zweiten Messwert Grafik- und/oder Steuerdaten für die Anzeigefläche, die eine gewünschte Wiedergabe dieser Messwerte auf der Anzeigefläche realisieren. Die Recheneinheit und die Steuereinheit können separat oder als integrale Bestandteile einer Zentralsteuereinheit ausgebildet sein.

In einer bevorzugten Ausführungsform ist die Vorrichtung als Fahrzeug (Land-, Wasser- oder Luftfahrzeug) ausgebildet, insbesondere als Kraftfahrzeug. In einer weiteren Ausführungsform ist die Vorrichtung als mobiles Kommunikationsgerät ausgebildet.

In der Zeichnung ist eine als Beispiel dienende Ausführungsform der Erfindung dargestellt. Es zeigen:
- Fig. 1: ein Blockschaltbild einer erfindungsgemäßen Vorrichtung;
- Fig. 2: ein Flussdiagramm eines erfindungsgemäßen Verfahrens, das auf der Vorrichtung aus Figur 1 durchgeführt wird;
- Fig. 3: ein Anzeigebild einer Anzeigefläche der Vorrichtung aus Figur 1 vor Eintritt einer Bedingung und
- Fig. 4: ein Anzeigebild der Anzeigefläche der Vorrichtung aus Figur 1 nach Eintritt der Bedingung.

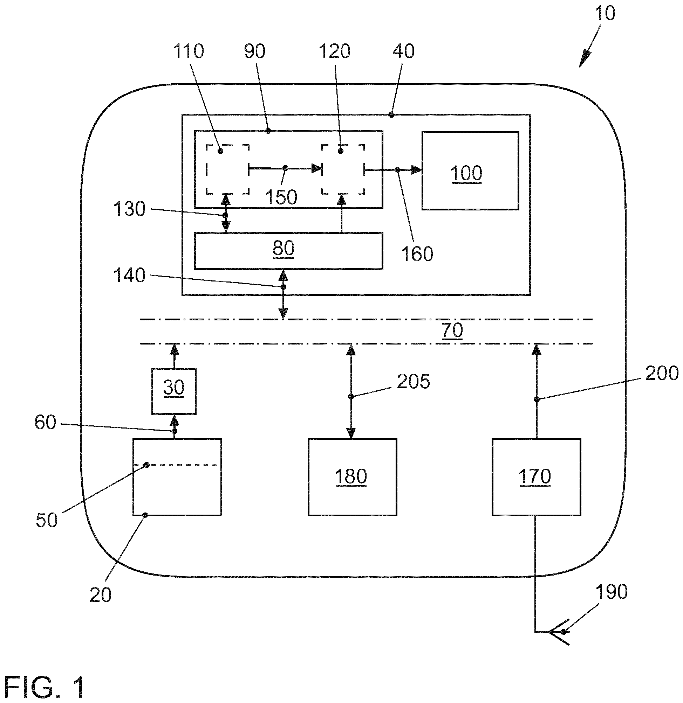

Fig. 1 zeigt eine als Kraftfahrzeug 10 ausgebildete erfindungsgemäße Vorrichtung. Das Kraftfahrzeug 10 umfasst einen als Tank 20 ausgebildeten Energiespeicher, eine als Tankstandsensor 30 ausgebildete Sensoreinheit und ein Kombiinstrument 40.

Der Tank 20 beinhaltet eine Kraftstoffmenge, die einen Energievorrat für den Betrieb des Kraftfahrzeugs darstellt. Die Kraftstoffmenge wird von einem Tankstand 50 repräsentiert, der ein Maß dafür bildet, wie viel Kraftstoff sich noch in dem Tank 20 befindet. Der Tankstand 50 wird durch den Tankstandsensor 30 ermittelt und ist durch einen Pfeil 60 angedeutet, der durch seinen Pfeil die Richtung des Informations- oder Datenflusses anzeigt. Der ermittelte Tankstand 50 wird als erster Messwert auf einem CAN-Bus 70 (CAN, Controller Area Network) bereitgestellt.

Das Kombiinstrument 40 weist eine Datenschnittstelle 80, eine Zentralsteuereinheit 90 und eine Anzeigefläche 100 auf. Die Zentralsteuereinheit 90 beinhaltet als integrale Bestandteile eine Recheneinheit 110 und eine Steuereinheit 120.

Die Recheneinheit 110 empfängt über die Datenschnittstelle 80 Daten von dem CAN-Bus 70 und stellt Daten über die Datenschnittstelle 80 für den CAN-Bus bereit; diese bidirektionale Datenübertragung ist durch Doppelpfeile 130 und 140 angedeutet. Die Recheneinheit 110 sendet auch Daten an die Steuereinheit 120 und wird durch einen Pfeil 150 veranschaulicht. Diese an die Steuereinheit 120 gesendeten Daten enthalten Informationen, die auf der Anzeigefläche 100 wiedergegeben werden sollen. Hierzu erzeugt die Steuereinheit 120 Steuersignale, mit denen die Anzeigefläche 100 so angesteuert wird, dass eine gewünschte Wiedergabe an einen Benutzer erfolgt; das Ansteuern der Anzeigefläche 100 mit den Steuersignalen ist an einem Pfeil 160 zu erkennen. Das Erzeugen der Steuersignale kann auch die Bearbeitung der von der Recheneinheit 110 empfangenen Daten umfassen, insbesondere eine grafische Aufbereitung, um eine bestimmte grafische Darstellung auf der Anzeigefläche 100 zu bewirken. Die Steuereinheit 120 ist auch eingerichtet, Daten über die Datenschnittstelle 80 von dem CAN-Bus zu empfangen; diese unidirektionale Datenübertragung ist an einem Pfeil 150 zu erkennen.

Das Kraftfahrzeug 10 weist ferner ein Infotainmentsystem 170 und ein Navigationssystem 180 auf. Das Infotainmentsystem 170 ist an eine Antenne 190 angeschlossen, über die es beispielsweise Verkehrsinformationen empfangen kann. Die Verkehrsinformationen werden von dem Infotainmentsystem 170 über den CAN-Bus 70 anderen Systemen bereitgestellt, beispielsweise dem Navigationssystem 180 und dem Kombiinstrument 40; diese Datenübertragung ist durch einen Pfeil 200 angedeutet. Das Navigationssystem 180 tauscht über den CAN-Bus 70 Daten mit anderen Systemen aus und wird durch einen Doppelpfeil 205 veranschaulicht.

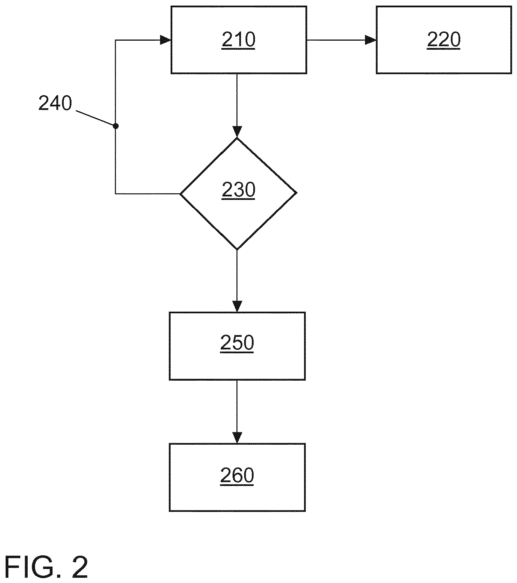

Fig. 2 zeigt ein Flussdiagramm eines erfindungsgemäßen Verfahrens, das in der Vorrichtung aus Fig. 1 durchgeführt wird.

In einem Schritt 210 empfängt die Recheneinheit 110 den Tankstand 50 als den ersten Messwert, der von dem Tankstandsensor 30 gemessen und auf dem CAN-Bus 70 bereitgestellt worden ist. Die Recheneinheit 110 überträgt den Tankstand 50 an die Steuereinheit 110, um dem Benutzer in einem Schritt 220 den aktuellen Tankstand 50 auf der Anzeigefläche 100 anzuzeigen.

In einem Schritt 230 vergleicht die Recheneinheit 110 den Tankstand 50 mit einem Schwellenwert, der vordefiniert und in einem Speicher (nicht dargestellt) gespeichert ist, aus dem die Recheneinheit 110 den Schwellenwert liest.

Stellt die Recheneinheit 110 fest, dass der Tankstand 50 größer ist als der Schwellenwert, dann wartet die Recheneinheit 110 ab, bis ein neuer Tankstand bereitgestellt wird; dies ist durch einen Pfeil 240 angedeutet, der von dem Schritt 230 zurück auf den Schritt 210 geht.

Stellt die Recheneinheit 110 dagegen fest, dass der Tankstand 50 den Schwellenwert erreicht oder unterschritten hat, dann ist eine vordefinierte Bedingung eingetreten. Die Recheneinheit 110 berechnet sodann in einem Schritt 250 die mit dem Tankstand 50 in Beziehung stehende voraussichtliche Restreichweite des Kraftfahrzeugs 10, die das Kraftfahrzeug 10 bei dem Tankstand 50 noch zurücklegen kann. Für diese Berechnung greift die Recheneinheit 110 auf Informationen zurück, die eine möglichst genaue Prognose erlauben. Zu diesen Informationen zählen insbesondere der Tankstand 50 und ein Durchschnittsverbrauch des Kraftfahrzeugs 10, der vorliegend aus Verbrauchsmessungen während einer vordefinierten Zeitspanne vor Eintritt der Bedingung ermittelt wird. Zudem werden Informationen des Navigationssystems 180 (wie topografische Daten von Streckenabschnitten in der Umgebung des Kraftfahrzeugs 10 oder entlang einer bestimmten Route) und die Verkehrsinformationen des Infotainmentsystems 170 bei der Ermittlung der Restreichweite berücksichtigt, sofern solche Informationen vorhanden sind. Die ermittelte Restreichweite wird an die Steuereinheit 120 übertragen.

Die Steuereinheit 120 erzeugt in einem Schritt 260 aus der von der Recheneinheit 110 empfangenen Restreichweite Grafikdaten für eine grafische Wiedergabe der Restreichweite auf der freiprogrammierbaren Anzeigefläche 100. Mit diesen Grafikdaten wird die Anzeigefläche 100 angesteuert und zeigt dem Benutzer die Restreichweite in einer gewünschten Weise an.

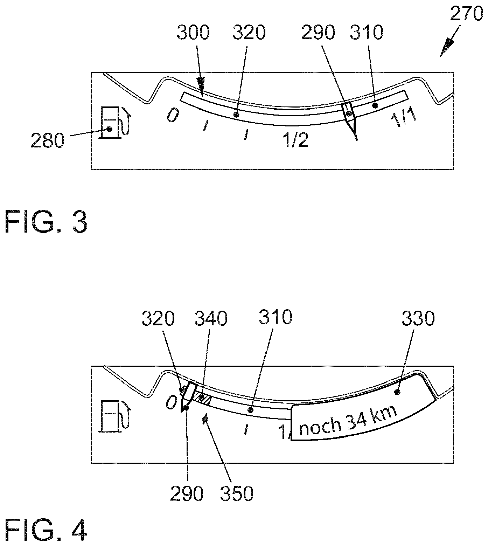

Fig.3 zeigt einen Ausschnitt der Anzeigefläche 100. In diesem Ausschnitt ist eine Tankstandanzeige 270 dargestellt, die durch ein grafisches Tanksymbol 280 gekennzeichnet ist. Der aktuelle Tankstand 50 wird mit Hilfe einer als Zeiger 290 ausgeführten Ablesemarke an einer Skala 300 wiedergegeben. Der Zeiger 290 überdeckt teilweise einen Teilstrich 310 der Skala, der anzeigt, dass der Tank 20 zu dreiviertel mit Kraftstoff gefüllt ist. Es ist zu erkennen, dass die Skala vollständig von der Anzeige leer "0" über halbvoll "1/2" bis voll "1/1" zu sehen ist. Aus der Beschreibung des erfindungsgemäßen Verfahrens in Fig. 2 folgt daraus, dass die Bedingung noch nicht eingetreten ist. Der Zeiger 290 teilt die Skala 300 in einen Bereich 310 "oberhalb" der Ablesemarke und einen Bereich 320 "unterhalb" der Ablesemarke.

Fig. 4 zeigt den Ausschnitt der Anzeigefläche 100 aus Fig. 3 zu einem Zeitpunkt, in dem die Bedingung eingetreten ist. Die Skala 300 ist nicht mehr vollständig zu sehen, sondern nur noch von der Anzeige leer "0" bis zur Anzeige etwa halbvoll "1/". In dem Bereich 310 "oberhalb" ist der die Restreichweite 330 des Kraftfahrzeugs 10 repräsentierende zweite Messwert "noch 34 km" derart wiedergegeben, dass er die Skala 300 in dem Bereich 310 "oberhalb" teilweise überdeckt. Die Skala 300 weist noch einen visuell hervorgehobenen Reservebereich 340 auf, der sich über das untere Achtel bis zu einem ersten Teilstrich 350 der Skala 300 erstreckt. Es sei angenommen, dass die Bedingung lautet: Hat der aktuelle Tankstand 50 den Reservebereich 340 erreicht oder unterschritten? Wenn diese Bedingung eintritt - also aktueller Tankstand 50 kleiner oder gleich ein Achtel - wird der zweite Messwert "noch ..." eingeblendet, wobei die "..." die Restreichweite angeben, die bei Eintritt der Bedingung vorlag. In Fig. 4 liegt der Eintritt der Bedingung zeitlich zurück, da der Zeiger 290 schon auf eine Stelle der Skala 300 zeigt, die unterhalb des ersten Teilstrichs liegt.

**Bezugszeichenliste**

| | | | |
|---|---|---|---|
| 10 | Kraftfahrzeug | 190 | Antenne |
| 20 | Tank | 200 | Pfeil |
| 30 | Tankstandsensor | 205 | Doppelpfeil |
| 40 | Kombiinstrument | 210 | Schritt |
| 50 | Tankstand | 220 | Schritt |
| 60 | Pfeil | 230 | Schritt |
| 70 | CAN-Bus | 240 | Pfeil |
| 80 | Schnittstelle | 250 | Schritt |
| 90 | Zentralsteuereinheit | 260 | Schritt |
| 100 | Anzeigefläche | 270 | Tankstandanzeige |
| 110 | Recheneinheit | 280 | Tanksymbol |
| 120 | Steuereinheit | 290 | Zeiger |
| 130 | Doppelpfeil | 300 | Skala |
| 140 | Doppelpfeil | 310 | Bereich "oberhalb" |
| 150 | Pfeil | 320 | Bereich "unterhalb" |
| 160 | Pfeil | 330 | Restreichweite |
| 170 | Infotainmentsystem | 340 | Reservebereich |
| 180 | Navigationssystem | 350 | Teilstrich |

## Patentansprüche

1. Verfahren zur Wiedergabe von Messwerten, bei dem ein einen Energievorrat eines Energiespeichers repräsentierender erster Messwert empfangen wird, ein mit dem ersten Messwert in Beziehung stehender zweiter Messwert ermittelt wird, der erste Messwert mit Hilfe einer Ablesemarke an einer Skala (300) wiedergegeben wird und der zweite Messwert wiedergegeben wird, **dadurch gekennzeichnet, dass**, wenn der erste Messwert einen Schwellenwert erreicht oder unterschreitet, der zweite Messwert die Skala (300) in einem Bereich (310) oberhalb der Ablesemarke zumindest teilweise überdeckend (330) wiedergegeben wird.

2. Verfahren nach Anspruch 1, **dadurch gekennzeichnet, dass** der Energiespeicher als Akkumulator ausgebildet ist und der erste Messwert den Ladezustand des Akkumulators repräsentiert.

3. Verfahren nach Anspruch 1, **dadurch gekennzeichnet, dass** der Energiespeicher als Kraftstoffbehälter eines Fahrzeugs ausgebildet ist und der erste Messwert den Füllstand des Kraftstoffbehälters repräsentiert.

4. Verfahren nach einem der vorstehenden Ansprüche, **dadurch gekennzeichnet, dass** die Skala (300), die Ablesemarke und der zweite Messwert als Bildschirmgrafiken realisiert werden.

5. Verfahren nach einem der vorstehenden Ansprüche, **dadurch gekennzeichnet, dass** der zweite Messwert eine Restbetriebsdauer repräsentiert.

6. Vorrichtung zum Durchführen des Verfahrens nach einem der Ansprüche 1 bis 5 mit einer Anzeigefläche (100), einer Datenschnittstelle (80), einer Recheneinheit (110), die eingerichtet ist, den ersten Messwert über die Datenschnittstelle (80) zu empfangen und den zweiten Messwert zu ermitteln, und einer Steuereinheit (120), die eingerichtet ist, den ersten Messwert mit Hilfe der Ablesemarke an der Skala (300) und den zweiten Messwert auf der Anzeigefläche (100) wiederzugeben, **dadurch gekennzeichnet, dass** die Steuereinheit (120) eingerichtet ist, wenn der erste Messwert einen Schwellenwert erreicht oder unterschreitet, den zweiten Messwert die Skala (300) in dem Bereich (310) oberhalb der Ablesemarke zumindest teilweise überdeckend (330) wiederzugeben.

7. Vorrichtung nach Anspruch 6, **gekennzeichnet durch** den Energiespeicher und eine Sensoreinheit zum Ermitteln des ersten Messwertes.

8. Vorrichtung nach Anspruch 7, **dadurch gekennzeichnet, dass** die Vorrichtung als Fahrzeug ausgebildet ist.

9. Vorrichtung nach Anspruch 7, **dadurch gekennzeichnet, dass** die Vorrichtung als mobiles Kommunikationsgerät ausgebildet ist.

## Claims

1. Method for reproducing measured values, where a first measured value representing an energy reserve of an energy store is received, a second measured value being in relation to the first measured value is determined, the first measured value is reproduced by means of a reading line on a scale (300) and the second measured value is reproduced, **characterised in that**, when the first measured value reaches or falls below a threshold value, the second measured value is reproduced at least partially overlapping (330) the scale (300) in a range (310) above the reading line.

2. Method according to claim 1, **characterised in that** the energy store is configured as accumulator and the first measured value represents the charge condition of the accumulator.

3. Method according to claim 1, **characterised in that** the energy store is configured as fuel reservoir of a vehicle and the first measured value represents the fill level of the fuel reservoir.

4. Method according to one of the preceding claims, **characterised in that** the scale (300), the reading line and the second measured value are realised as screen graphics.

5. Method according to one of the preceding claims, **characterised in that** the second measured value represents a remaining period of operation.

6. Device for carrying out the method according to one of the claims 1 to 5 with a display area (100), a data interface (80), a processing unit (110), which is equipped to receive the first measured value via the data interface (80) and to determine the second measured value, and a control unit (120), which is equipped to reproduce the first measured value by means of the reading line on the scale (300) and the second measured value on the display area (100), **characterised in that** the control unit (120) is equipped, when the first measured value reaches or falls below a threshold value, to reproduce the second measured value at least partially overlapping the scale (300) in the range (310) above the reading line.

7. Device according to claim 6, **characterised by** the energy store and a sensor unit for determining the first measured value.

8. Device according to claim 7, **characterised in that** the device is configured as vehicle.

9. Device according to claim 7, **characterised in that** the device is configured as mobile communication apparatus.

## Revendications

1. Procédé pour reproduire des valeurs de mesure, dans lequel une première valeur de mesure représentant une réserve d'énergie d'un accumulateur d'énergie est reçue, une deuxième valeur de mesure étant liée avec la première valeur de mesure est déterminée, la première valeur de mesure est reproduite à l'aide d'une marque de lecture à une échelle (300) et la deuxième valeur de mesure est reproduite, **caractérisé en ce que**, quand la première valeur de mesure atteint ou est inférieure à une valeur seuil, la deuxième valeur de mesure recouvrant au moins partiellement l'échelle (300) dans une zone (310) située au-dessus de la marque de lecture (330) est reproduite.

2. Procédé selon la revendication 1, **caractérisé en ce que** l'accumulateur d'énergie est conçu comme un accumulateur et la première valeur de mesure représente l'état de charge de l'accumulateur.

3. Procédé selon la revendication 1, **caractérisé en ce que** l'accumulateur d'énergie est conçu comme un réservoir de carburant d'un véhicule et la première valeur de mesure représente le niveau de remplissage du réservoir de carburant.

4. Procédé selon l'une des revendications précédentes, **caractérisé en ce que** l'échelle (300), la marque de lecture et la deuxième valeur de mesure sont réalisées sous forme de graphiques d'écran.

5. Procédé selon l'une des revendications précédentes, **caractérisé en ce que** la deuxième valeur de mesure représente une durée de vie opérationnelle restante.

6. Dispositif pour la mise en œuvre du procédé selon l'une des revendications 1 à 5 avec une zone d'affichage (100), une interface de données (80), une unité de calcul (110), qui est conçue pour recevoir la première valeur de mesure à travers l'interface de données (80) et pour déterminer la deuxième valeur de mesure, et une unité de commande (120), qui est conçue pour reproduire la première valeur de mesure à l'aide de la marque de lecture à l'échelle (300) et la deuxième valeur de mesure dans la zone d'affichage (100), **caractérisé en ce que** l'unité de commande (120) est conçue, quand la première valeur de mesure atteint ou est inférieure à une valeur seuil, pour reproduire la deuxième valeur de mesure recouvrant au moins partiellement l'échelle (300) dans la zone (310) située au-dessus de la marque de lecture (330).

7. Dispositif selon la revendication 6, **caractérisé par** l'accumulateur d'énergie et une unité de détection pour la détermination de la première valeur de mesure.

8. Dispositif selon la revendication 7, **caractérisé en ce que** le dispositif est conçu comme un véhicule.

9. Dispositif selon la revendication 7, **caractérisé en ce que** le dispositif est conçu comme un appareil de communication mobile.
